# EUROPEAN PATENT APPLICATION

(11) **EP 2 902 202 A1**
(43) Date of publication of application: **05.08.2015**
(21) Application number: 15152845.2
(22) Date of filing: 28.01.2015
(51) Int. Cl.: B41F 23/08, B41F 19/00, B41J 11/00, B41J 2/21

(54) **Gloss management**

(30) Priority: 31.01.2014 EP 14153421
(71) Applicant: OCE-Technologies B.V., 5914 CA Venlo (NL)
(72) Inventor: Baar, Teun R., 5914 CA Venlo (NL); Ortiz Segovia, Maria V., 5914 CA Venlo (NL); Leynadier, Christophe A., 5914 CA Venlo (NL)
(74) Representative: Draaisma, Henricus Johannes George

(57) **Abstract**

The present invention provides a method for printing a colour image with a predefined local gloss appearance, using a printer having means to control an amount of colorant in dependence on a position on a receiving material and having means to control an amount of gloss appearance in dependence on a position on said receiving material using at least one process control parameter, wherein a colour of the colour image is converted into a colorant composition, the method comprising the step of determining a colorant composition and at least one process control parameter in dependence on both a predefined colour and a predefined amount of local gloss appearance.

## Description

### BACKGROND OF THE INVENTION

### 1. Field of the invention

Many colour printers apply colorants on a receiving material according to a colour image provided to the printer. The print process usually results in a uniform gloss of the printed image. The present invention relates to a method for printing a colour image with a predefined local gloss appearance, using a printer having means to control an amount of colorant in dependence on a position on a receiving material and having means to control an amount of gloss appearance in dependence on a position on said receiving material using at least one process control parameter. The present invention further relates to a computer program product comprising instructions for executing the invented method.

### 2. Description of the Related Art

Gloss appearance is a quality of a printed output that is often considered as a characteristic of a print process. It is known to be affected by selecting an appropriate receiving material, such as described in US Patent No. 5,141,599. It is also known that the gloss appearance is affected by an after-treatment, i.e. after finishing the printing of the colour image, by the application of an agent, such as described in US Patent No. 4,095,234, by the application of heat or mechanical pressure, such as described in US Patent No. 4,853,706 and by the application of radiation, such as described in US Patent Application 2014/0002572. Another known method to accommodate a gloss appearance for an ink jet printer in which hot melt ink is applied, is described in US Patent No. 6,869,174. In this method, a matte appearance of text and a glossy appearance of images are obtained by selecting a print strategy that defines an order of dots that are printed on the receiving material by using a print mask and a number of passes to apply the required dots.

In general, gloss is related to optical surface properties of materials yielding a shiny or metallic appearance of an object. Gloss is known to be a multi-dimensional property, discerning specular gloss, sheen, contrast gloss, absence of bloom, distinctness of image, and surface uniformity. In this patent application, gloss mainly refers to specular gloss, which is the ratio of an intensity of reflected light to incident light on a surface, in case the angles for the incident and reflected light are equally placed on opposite sides of a surface normal. Gloss meters for measuring specular gloss apply gloss units. A gloss unit (GU) is defined in such a way that a glossy material with a refractive index of 1.567 has the value of 100 GU for any illumination angle. Usually, this glossy material is a mirror-like black glass that is used as a surface of reference. Standard gloss measurements are conducted for different illumination angles such as 20, 30, 45, 60, 75, and 85 degrees. It is known that the amount of gloss strongly correlates with a surface roughness.

Recently, some printers have been configured to apply local gloss appearance. This means that an additional layer, or channel, in a digital image is used to indicate a level of gloss, varying over the image, ranging from a minimum value to a maximum value. This feature is also known as intentional differential gloss, or gloss contrast. It is for example achieved by the image-wise coating of clear ink or toner, also known as varnish. It may be used to make watermarks or glossy high-lighted patterns on colour prints.

The control of colour in a digital process leading to the application of colorants in a printer is a task often attributed to a colour management, or colour matching system. This system applies a colour conversion table, or colour profile, wherein a colour as specified in an input colour space is converted to a colorant composition to be applied for pixels that have the indicated colour. Commonly, it is required to make colour measurements for a number of colorant combinations in order to obtain a colour profile of the printer as an output device, which is a table for a selected number of colours. Colorant combinations for colours that are not in the profile are deduced through interpolation. Alternatively, colour conversion equations may be employed, although these are less adaptable than colour profiles.

However, it has been noticed that the appearance of a colour is influenced by the gloss level as defined in the gloss appearance layer. In general, a higher gloss level yields a more saturated colour, as measured in an out of specular reflection measurement geometry, such as a 45/0 geometry, in which light comes in at 45 degrees and is measured perpendicular to the surface. Therefore, a problem exists in obtaining a colour appearance, corresponding to an intended colour, when a gloss level varies. An object of the present invention is to obtain a defined colour, independent of the local gloss level in an image.

### SUMMARY OF THE INVENTION

According to the present invention, a method is provided for printing a colour image with a predefined local gloss appearance, using a printer having means to control an amount of colorant in dependence on a position on a receiving material and having means to control an amount of gloss appearance in dependence on a position on said receiving material using at least one process control parameter, wherein a colour of the colour image is converted into a colorant composition, the method comprising the step of determining a colorant composition and at least one process control parameter in dependence on both a predefined colour and a predefined amount of local gloss appearance. Therefore, instead of modifying an amount of gloss independent of a colour and/or colorant composition, a predefined local gloss level is used in addition to a colour in a colour image for determining a colorant composition. In this way, a colorant composition that appears more saturated when a high gloss level is indicated, compared to its appearance when a low gloss level is defined, will not only depend on the colour defined in the image, but also on the gloss level. The profile measurements include a measurement of gloss appearance and a test chart is made for a set of colorant compositions in combination with the process control parameters that control the gloss appearance.

In a further embodiment, the available set of process control parameters is used to create a range of gloss appearance. The various methods for changing a gloss appearance, as controlled by more than one process control parameter, are, after profiling, applied in accordance with a measured gloss appearance, using gloss units. Thus, a gloss range is extended relative to a range that is obtained by the variation of one control parameter only.

Further details of the invention are given in the dependent claims. The present invention may also be embodied in a computer program product, including computer readable code embodied on a computer readable medium, said computer readable code comprising instructions for executing the steps of the invented method.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1 is a workflow to print gloss and colour according to the prior art;
Fig. 2 is a workflow to print gloss and colour according to the present invention;
Fig. 3 shows a number of pixels in an input image and an output image in a workflow according to the present invention; and
Fig. 4 is an alternative workflow to print gloss and colour according to the present invention.

### DETAILED DESCRIPTION OF EMBODIMENTS

The present invention will now be described with reference to the accompanying drawings, wherein the same or similar elements are identified with the same reference numeral.

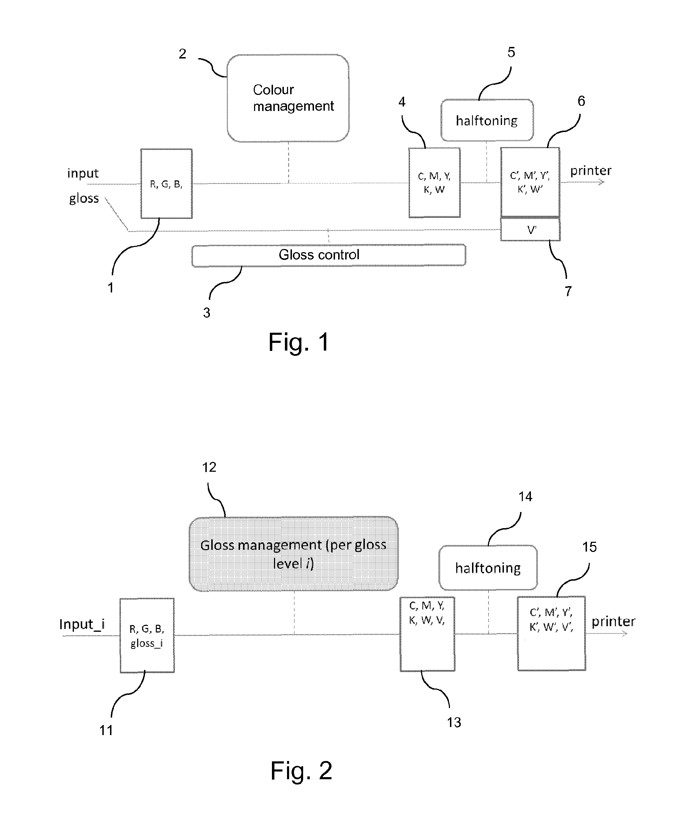

Fig. 1 shows a workflow for printing a colour image with an additional channel indicating a gloss level as is used in known prior art. An input image having colours defined in R, G, B channels 1 is converted by a colour management system 2 into an image 4 having five colorant channels, C, M, Y, K for cyan, magenta, yellow and black colorant and W for a white colorant. In other systems, the white colorant is absent and four colorant channels are applied. The image 4 is processed by a halftoning method 5 into an image 6 that is in a suitable form for an available printer. The gloss level channel is processed separately, if necessary, by a gloss control module 3, into a gloss control parameter 7 that is used by the printer. The V' channel in this example indicates a channel for the application of varnish that is applied to the output colour image after finishing the application of other colorants. However, also other gloss control parameters are known, as previously described. Note that in this example the white colorant is not used for producing a gloss effect, but only for producing a colour.

In Fig. 2 an embodiment of a workflow according to the present invention is shown. In this embodiment, an input image 11 has four channels, three indicating a colour and one indicating a gloss level. For each of a discrete set of input gloss levels, a colour profile is determined. These colour profiles are used by a gloss management system 12 to convert an input colour into colorants and gloss control parameters at the same time, obtaining an output image 13 that has six channels. The gloss level channel of the input image 11 is used to select an associated colour profile from the discrete set of colour profiles. If there is no profile available for an indicated gloss level, an interpolation of colorant and gloss control parameter values taken from two profiles is made. In this embodiment, the varnish channel V and the white colorant channel W are used to control the amount of gloss in the output image. Both channels have a range larger than 100% coverage, since a printer may apply more than one layer of the corresponding colorant. In the present embodiment, an eight bit channel is used to indicate a range of 0% to 300% for the V and W channel. The halftoning module 14 converts the levels in the available channels into discrete levels in image 15 that are acceptable for the available printer. Both a ColorWave 600, applying hot melt ink, and an Arizona 480, applying UV-curable ink have been used for this purpose. Other printers offering the possibility of controlling gloss may also be used. In another embodiment, a time control parameter is used to indicate a waiting time between two swaths of the printer. This parameter does not need to be halftoned and is left unchanged by the halftoning module.

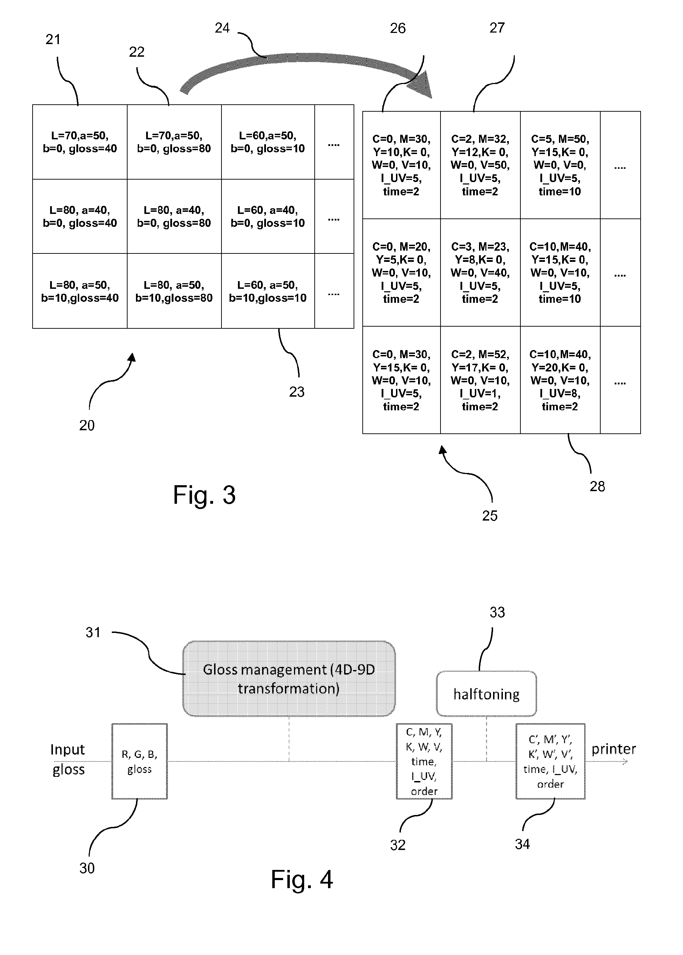

Fig. 3 shows a part of an input image 20 that is converted by a gloss management module according to the present invention, indicated by the arrow 24, into an output image 25. Each part or pixel of the input image 20 is defined by colour and gloss values, as indicated here by L, a, b which are colour values in the familiar CIE Lab colour space and a gloss value, here indicated in gloss units ranging from 0 to 100. In the output image 25, each pixel has eight values, corresponding to six colorant channels and two additional gloss control parameters for a particular printer, applying UV-curable ink. The additional parameter I_UV indicates an intensity of UV-light in a range of 0 to 9, that may be applied by adjusting the power of the UV light source. Alternatively, multiple UV light sources may be used to adjust the UV curing light intensity. The additional parameter time indicates a time in seconds that is necessary between the application of two swaths. These parameters depend on the printer that is controlled. In another embodiment, an additional parameter indicates a print mask to be applied in order to adapt a print strategy for printing a pixel. Pixel 21 and pixel 22 in the input image have the same colour, as defined by their Lab value, but a different gloss level. In the corresponding pixels 26 and 27 in the output image, the different gloss level has an effect on the amounts of colorant that is applied, both the colour carrying colorants cyan (C), magenta (M) and yellow (Y) and on the amount of varnish (V). In the same way, pixel 23 in the input image converts to pixel 28 in the output image, requiring a different amount of curing intensity.

Fig. 4 shows a further embodiment, in which nine output channels are used. In this embodiment, no discrete colour profiles for a discrete set of input gloss levels are used, but one complete profile for a conversion from a 4-dimensional colour-gloss space to a 9-dimensional printer control parameter space is made. Again, an input image 30 having R, G, B, gloss values is converted to an output image 32 having nine channels for controlling a printer, including channels determining an amount of colorant. The control parameter order indicates whether all pixels are printed in one pass, or in two passes, separating even from odd numbered pixels. A halftoning module 33 adepts the available levels in a channel to the one needed by the printer in image 34. The gloss management module 31 uses measurement data that are obtained from a test chart including test areas in which each of the printer control parameters are varied. Compared to the embodiment of Fig. 2, this approach is somewhat less flexible, since all measurements have to be available at the time of composing a singe look-up table. In the embodiment of Fig. 2, an additional colour profile for an additional input gloss level can be added at a different time, thereby increasing the gloss level accuracy. However, both embodiments enable the use of several printer control parameters to produce gloss in a range that is not available by varying a single parameter. Furthermore, both embodiments enable the independent control of gloss and colour, which enhances the possibilities of using intentional differential gloss.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for printing a colour image with a predefined local gloss appearance, using a printer having means to control an amount of colorant in dependence on a position on a receiving material and having means to control an amount of gloss appearance in dependence on a position on said receiving material using at least one process control parameter, wherein a colour of the colour image is converted into a colorant composition, the method comprising the step of determining a colorant composition and at least one process control parameter in dependence on both a predefined colour and a predefined amount of local gloss appearance.

2. The method according to claim 1, wherein the printer comprises a white colorant and a process control parameter determines an amount of white colorant that is printed before applying a colorant.

3. The method according to claim 1, wherein the printer comprises means for applying varnish and a process control parameter determines an amount of varnish that is printed after applying all colorants.

4. The method according to claim 1, wherein the printer applies the colorants in several passes and a process control parameter determines an amount of time between the passes.

5. The method according to claim 1, wherein a process control parameter determines an order of dots to be printed.

6. The method according to claim 1, wherein a colorant is a UV-curable ink and a process control parameter determines an intensity of a UV-light source.

7. The method according to claim 1, wherein the available set of process control parameters is used to create a range of gloss appearance.

8. A computer program product, including computer readable code embodied on a computer readable medium, said computer readable code comprising instructions for executing the steps of the method of claim 1.
